# EUROPEAN PATENT SPECIFICATION

(11) **EP 2 279 891 B1**
(45) Date of publication and mention of the grant of the patent: **05.04.2017**
(21) Application number: 10013019.4
(22) Date of filing: 24.02.2006
(51) Int. Cl.: B60K 37/06, B60K 35/00, G05G 1/02, G05G 1/08, G05G 9/047

(54) **Multifunction input device**
Multifunktionseingabegerät
Dispositif d'entrée multifonction

(43) Date of publication of application: 02.02.2011
(62) Divisional of application: 06003851.0
(73) Proprietor: Harman Becker Automotive Systems GmbH, 76307 Karlsbad (DE)
(72) Inventor: Peißner, Maria, 80804 München (DE); Metternich-Heider, Barbara, 70794 Filderstadt (DE); Roessger, Peter, Dr., 72631 Aichtal (DE); Preißner, Olaf, 73230 Kirchheim unter Teck (DE); Fritz, Sandra, 70794 Filderstadt (DE); Johannsen, Ulrike, 70565 Stuttgart (DE)
(74) Representative: Grünecker Patent- und Rechtsanwälte PartG mbB

(56) References cited:
- WO-A1-03/036611
- DE-A1- 10 105 177
- DE-A1- 19 951 379
- US-A1- 2005 034 557
- US-A1- 2006 012 584
- US-B1- 6 525 714

## Description

The present invention relates to a multifunction input device for operating a plurality of systems of a power driven vehicle, the input device having the features of the preamble of claim 1.

A generic multifunction input device is known from EP 0 893 750 B1. The input device comprises a knob which is rotatable about its axis, pivotable and axially movable.

Such input devices are offered in lots of cars. However, it appears that this input device does not in any case accommodate with the driver's wishes as to handling.

US patent application US 2006/0012584 A1 teaches a rotatable control knob which is moveable also in the lateral plane approximately perpendicular to the axis of rotation.

It is the object of the present invention to provide a multifunction input device which can be simply constructed and can be operated easily although it allows a good selection function within a plurality of systems of a power driven vehicle.

According to the present invention, the object is solved by a multifunction input device having the features of independent claim 1.

Surprisingly, the inventive input device can be operated easily and precisely although its multipart structure provides touch surfaces being accessible for the driver and being movable relative to each other. The driver can stay concentrated on the traffic while making his selection within the plurality of system functions of the vehicle. Nevertheless, the arrangement of the main part and the relatively hereto rotatable rotational element can be realised in a simple construction.

In a preferred embodiment, the main part may comprise a hand rest. The hand rest allows comfortable operation of the rotation element. Further it disburdens the driver's attention for operating the input device. If the driver's hand has found its place on the input device it is no longer necessary that the driver controls the position of his hand.

Advantageously, the main part may comprise at least one button. Hereby, the space on the main part can be used efficiently, i.e. a compact arrangement of input elements of the input device can be achieved, and the button can be easily found.

The rotation element is movable with respect to the main part in a press button-like manner. This provides for a further possibility of input in addition to the selection due to the rotative position of the rotation element. That is, the rotation element has an integrated functionality.

The rotation element has a ring-like shape. Such a shape provides for a comfortable touch surface for operating the rotation element while also a good integrity of the rotation element and the main is possible.

The rotation element is rotatable around a centre part. The centre part can be used functionally and/or as an orientation for the operator.

The centre part comprises at least one button. Hereby, the space of the centre part can be used efficiently, i.e. a good compactness is possible. Further, a hand operating the rotation element can easily find the at least one button in a haptical manner. The driver can abstain from looking at the input device to find said at least one button.

The rotation element is arranged offset with respect to a middle of the main part. Surprisingly, the rotation element can be operated easily although it is arranged offset.

Preferably, the rotation element may be arranged at or near a margin of the main part. In this position the rotation element can be easily operated with a finger tip.

Favourably, the outer dimension of the touch surface of the rotation element may correspond to an operating area of a finger of a hand resting with respect to the input device. Hereby, any position of the touch surface can be reached by the finger. This means that the rotation element can be rotated continuously in all its rotation positions wherein the finger can keep in touch with the rotation element.

Advantageously, the touch surface of the rotation element may have a diameter in the range of about 1 cm to 9 cm, preferably in the range of about 1 cm to 4 cm. In the diameter range of about 1 cm to 9 cm the rotation element can be operated with good precision by a finger. In a diameter range of about 1 cm to 4 cm the touch surface can be operated by finger motions in a particularly comfortable range.

Particularly preferable, the main part and the rotation element may be movable together with respect to a basis carrying the selection unit. Hereby, further selection can be made in addition to the selection according to the rotative position of the rotation element.

Advantageously, the main part and the rotation element may together be transversely shiftable with respect to the basis. This allows an operation movement which can be easily distinguished by an operator from the rotative selection movement of the rotation element.

Favourably, the touch surface of the main part may have a general dome-like shape, preferably a spherical calotte-like shape. This provides for a good orientation of a driver's hand on the input device.

Particularly advantageous, the touch surface of the rotation element may have a shape generally setting forth the shape of the touch surface of the main part. Hereby, the main part and the rotation element together have a generally dome-like, preferably calotte-like shape providing for a good orientation of a driver's hand on the input device.

Particularly favourable, the rotational axis of the rotation element may be generally identical or parallel to a middle axis of an outside shape of the main part. Thereby, the outside shape of the main part supports a good operability of the rotation element especially when the hand of the operator is rotated for rotating the rotation element or rests on the main part and the fingers carry out a circumferential movement to rotate the rotation element.

Preferably, the rotation axis of the rotation element may be inclined with respect to a middle axis of the shape of the touch surface of the main part. Hereby, a good operability of the rotation element is supported, especially when the rotation element is rotated by a finger tip being moved within an operating area of the finger.

Advantageously, the rotational axis may be transverse to the middle axis. This allows a good operability of the rotation element, especially by using a longitudinal side of a finger.

Embodiments of the invention are shown in the drawing and are described below. In the drawing, the following is shown:
- Fig. 1: is a top view of an exemplary input device,
- Fig. 2: is a side view of the input device of Fig. 1,
- Fig. 3: depicts schematically the functions of the input device as shown in Figs 1 and 2,
- Fig. 4: is a top view of another exemplary input device,
- Fig. 5: is a side of the input device as shown in Fig. 4,
- Fig. 6: is a perspective view of an inventive input device according to a first embodiment,
- Fig. 7: shows the input device of Fig. 6 during use,
- Fig. 8: is a top view of an inventive input device of a second embodiment,
- Fig, 9: is a schematic top view of another exemplary input device, and
- Fig. 10: is a partial sectional view of the input device shown in Fig. 9.

In the present description the same reference signs are used for analogue parts in the different embodiments.

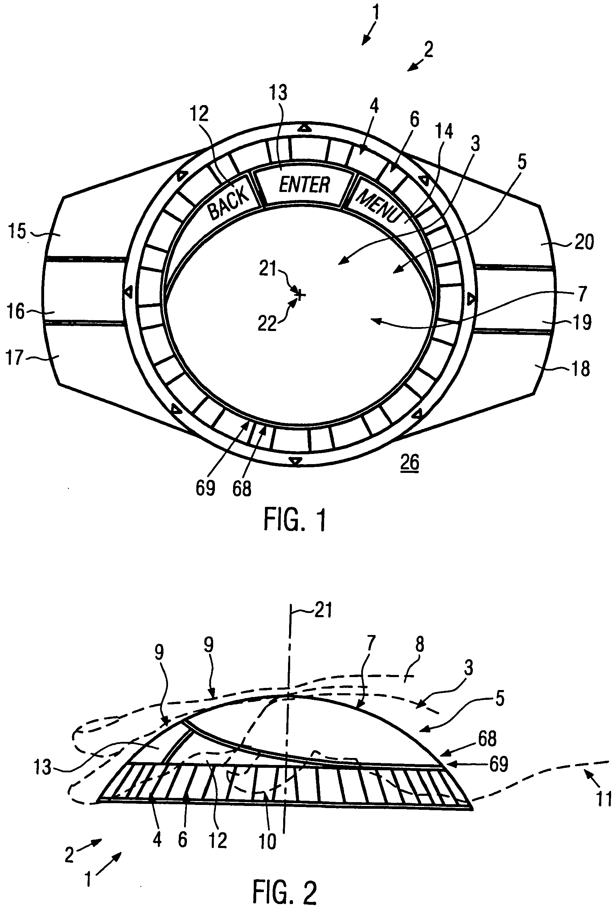

Fig. 1 shows an exemplary multifunction input device 1 of a first illustrative example in a top view. The input device 1 serves to operate a plurality of systems of a not shown power driven vehicle. The plurality of systems may comprise for instance an air-conditioning system, a navigation system, a board computer, a communication system, e.g. a mobile telephone system, an entertainment system, e.g. an audio system, and so on.

The input device 1 comprises a selection unit 2 by means of which the driver can make a selection within the options and functions of the plurality of systems. The selection unit 2 comprises a main part 3 and a rotation element 4 being rotatable relative to the main part 3. Each of the main part 3 and the rotation element 4 comprises a touch surface 5, 6 being accessible during use of the input device 1. That is, the touch surface 6 of the rotation element 4 is rotatable relative to the touch surface 5 of the main part 3. This means that the exemplary input device has a multipart structure accessible to the user.

The main part 3 comprises a hand rest 7 on which a hand 8 may rest while operating the input device as shown in Fig. 2. This provides for a comfortable use of the input device as the fingers 9, 10 and the associated arm 11 are disburdened from carrying the weight of the hand and arm. This makes it possible to operate the input device in a relaxed manner.

The whole main part may serve as a hand rest, i.e. the whole touch surface of the hand rest might be the whole touch surface of the main part. However, it is possible that the main part 3 comprises at least one further part, e.g. at least one button. In the first embodiment illustrative example the main part 3 comprises three buttons 12, 13, 14 which are arranged adjacent to the hand rest 7, namely between the hand rest 7 and the rotation element 4. It is also possible to arrange one or more buttons in a manner surrounded by a part of the hand rest 7.

At least one button may be arranged in an area of the main part 3 in which at least one finger 9, 10 of the hand 8 is positioned when the input device 1 is operated. In the first example all buttons 12, 13, 14 are arranged in an area which can be covered by fingers 9, 10. Hereby, the buttons can be operated easily wherein only a slight movement of the associated finger 9, 10 is necessary.

In the first illustrative example the rotation element 4 has a ring-like shape. The touch surface 6 of the rotation element 4 is arranged surrounding the touch surface 5 of the main part 3. The main part 3 serves as a centre part around which the rotation element 4 is rotatable.

The input device may comprise at least one further button which is arranged near the selection unit. In the first example six additional buttons 15-20 are provided partially surrounding the rotation element as shown in Fig. 1.

The touch surface 5 of the main part 3 may have a general dome-like outer shape. In the first example as shown in Fig. 2 it has a spherical calotte-like shape. The touch surface 6 of the rotation element 4 has an outside shape generally setting forth the shape of the touch surface 5 of the main part 3. That is, the main part 3 and the rotation element 4 have together a generally dome-like outer shape which is, in the first example, a spherical calotte-like outer shape.

The outside shape of the main part 3 has a middle axis 21 and the rotation element 4 has a rotation axis 22. In the first example the middle axis 21 and the rotation axis 22 are coincident with each other. It is also possible to provide them parallel to each other.

By the provision of the generally dome-like outside shape of the main part is hand is well supported by the main part, especially as the dome-like outside shape corresponds to the hand hole as well as to a relaxed attitude of the hand.

By the dome-like outside shape and the parallel or coincident of the axis 21, 22 the hand is well guided when it is rotated relative to the main part when the rotation element is rotated.

It is possible to provide the main part with a substantially flatter outside shape than shown in Fig. 2.

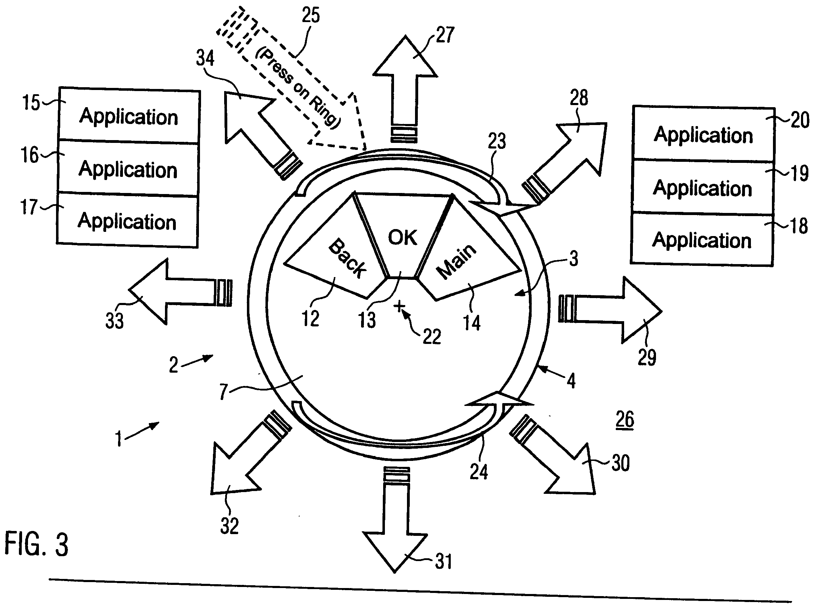

The functionality of the input device is schematically illustrated in Fig. 3. The rotation element 4 is bidirectionally rotatable as indicated by the arrows 23 and 24, preferably the rotation element 3 can be continuously rotated by 360° or more.

The rotation element 4 can be provided movable with respect to the main part 3 in a press button-like manner as indicated by the arrow 25 with dashed lines. This provides an input functionality in addition to the selection made via the rotation of the rotation element 4. It is possible to use the press button-like movability of the rotation element 4 as an "okay" function. However, it is also possible that - if provided - one the buttons 12-20 is used for the "okay" function, preferably, one of the buttons 12-14 of the main part 3. Advantageously, the central one 13 of these buttons is used therefor.

The press button-like movement is a transverse shift movement, e.g. traverse to or along the rotational axis 22 of the rotation element, and/or a pivoting movement around an axis different to said rotational axis 22.

The main part 3 and the rotation element 4 might be movable together with respect to a basis 26 carrying the selection unit 2. The additional movement is possible in at least one direction. In the first example the main part and the rotation element are movable together in eight directions as indicated by arrows 27-34 in Fig. 3. By a movement in the respective direction a selection is made.

In the first example the main part and the rotation element are together movable transversely shiftable with respect to the basis 26,

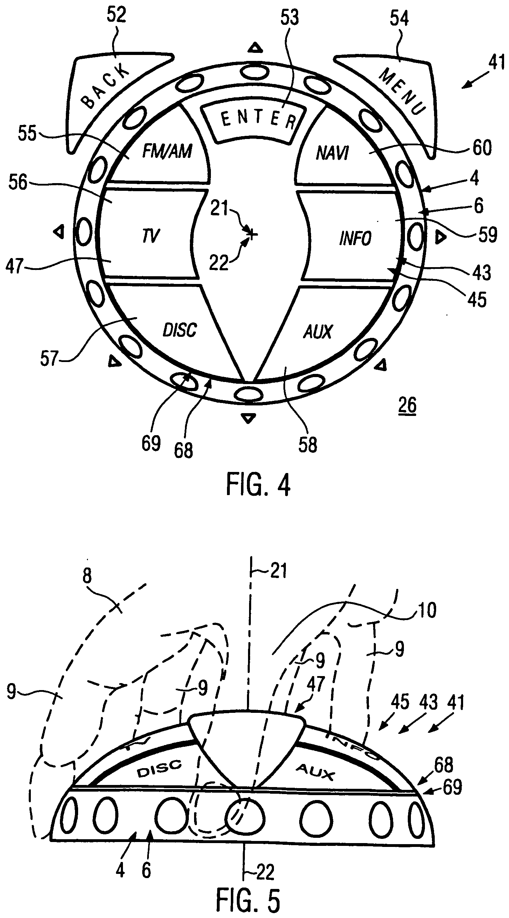

In Figs. 4 and 5 a multifunction input device 41 according to a second illustrative example is shown. The differences of this input device 41 to the input device according to the first illustrative example are described below.

The input device 41 has a main part 43 with a stepped touched surface 45. A hand rest 47 of the main part 43 projects outwardly from the remaining outside surface of the main part as shown in Fig. 5.

The main part 43 comprises a plurality of buttons 53, 55, 5B, 57, 58, 59, 60. One 53 of them is surrounded by the hand rest 47 as shown in Fig. 4. The remaining buttons 55, 56, 57, 58, 59, 60 are arranged adjacent to the hand rest, namely between the hand rest 47 and the rotation element 4. The buttons are arranged symmetrically wherein three buttons 55, 56, 57 are arranged on one side of the hand rest 47 and the further three buttons 58, 59, 50 are arranged on the other side of the hand rest 47. This arrangement provides a grouping of the buttons.

By providing the button 53 surrounded by the hand rest 47 the button is prevent from being pressed accidentally. Therefore, it can be used for a special function, e.g. a function used in connection with the selection made with the other selection elements. Such a special function can be the "okay" function.

Outside the ring-like rotation element 4 the input device 41 comprises two additional buttons 62 and 54.

As shown in Fig- 5. it is possible to operate the input device with the hand hole being distanced to the hand rest 47. This is also valid for the other embodiments.

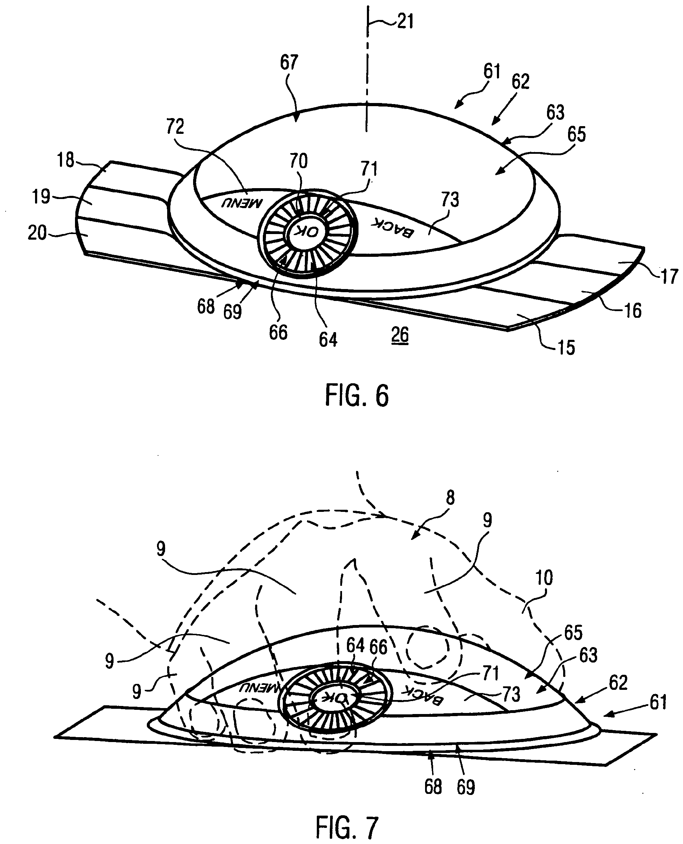

In Figs. 6 and 7 a multifunction input device 61 according to a first embodiment of the present invention is shown- In the following, the differences of this input device 61 to the input device 1 of the first illustrative example are described.

The input device 61 of the first embodiment comprises a selection unit 62 with a main part 63 and a rotation element 64 wherein the rotation element 64 is arranged offset with respect to a middle of the main part 63. Therein, the rotation element 64 is arranged near a margin 68 of the main part 63 wherein the rotation element 64 is surrounded by the touch surface 65 of the main part 63 as shown in Fig. 6. It is also possible to arrange the rotation element 64 aligning with an outer edge 69 of the main part 63 or projecting from this outer edge 69.

The not shown rotational axis of the rotation element 64 is inclined with respect to the middle axis 21 of the main part 63.

The rotation element 64 has a ring-like shape and is rotatable about a centre part 70. The centre part 70 comprises one or more buttons. In the first embodiment the centre part 70 comprises one button 71 generally covering the area surrounded by the ring-like shaped rotation element 64. Preferably, the button 71 has a special function such as an "okay" function. Hereby, a finger rotating the rotation element 64 for making a selection can easily press the button 71 with a small movement.

Fig. 7 shows the input device 61 in use. The hand 8 is in general in the intended position for operating the input device 61. With respect to this orientation of the hand 8 the rotation element 64 is arranged at a front part of the selection unit 62. The rotation element 64 can preferably be operated by the middle finger of the hand and/or the adjacent fingers.

The outer dimensions of a touch surface 66 of the rotation element correspond to the operating area of the associated finger or fingers for operating it. Hereby, the finger rotating the rotation element 64 can stay on its touch surface 66 while rotating the rotation element 64 continuously, e.g. 360° or more.

Preferably, the touch surface 66 of the rotation element 64 may have a diameter in the range of about 1 cm to 9 cm which are practical dimensions. More preferably, it has a diameter in the range of about 1 cm to 4 cm which allows a comfortable operation of the rotation element 64 while still allowing the rotation element 64 to be positioned precisely.

It is also possible to provide the rotation element in a disc-like shape. It might be movable in a press button-like manner as described with respect to the first embodiment, especially in a manner along its rotational axis. Hereby, it can fulfil the function of the button 71 associated with the ring-like shaped rotation element 64. It is also possible to provide the ring-lik shaped rotation element 64 as being movable in said press button-like manner(s).

The main part 63 comprises two further buttons 72, 73 arranged on two sides of the rotation element adjacent to same. These buttons can be easily operated by the finger operating the rotation element 64 or the fingers adjacent to this finger.

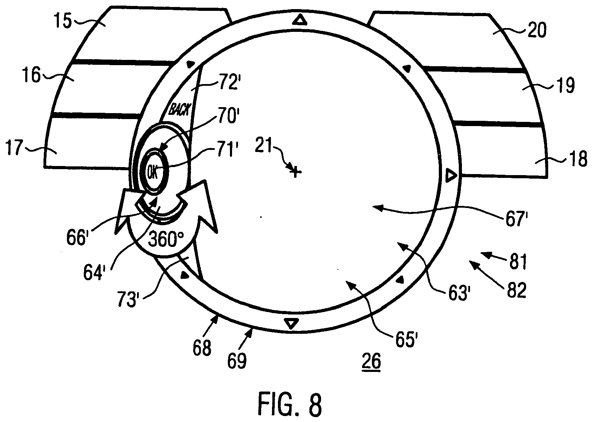

Fig. 8 shows a multifunction input device 81 of a second embodiment of the present invention. To this input device 81 the same applies as outlined with respect to the input device 61 of the first embodiment except to the arrangement of the rotation element and its associated buttons. For the reasons the parts being analogue to the first embodiment except for their position are indicated with reference numerals having an apostrophe.

The rotation element 64' and its associated buttons 71', 72', 73' are arranged in a position in the area of a thumb 10 of the hand 8 shown in Fig. 7. That is, the thumb 10 can operate the rotation element and the buttons in its area.

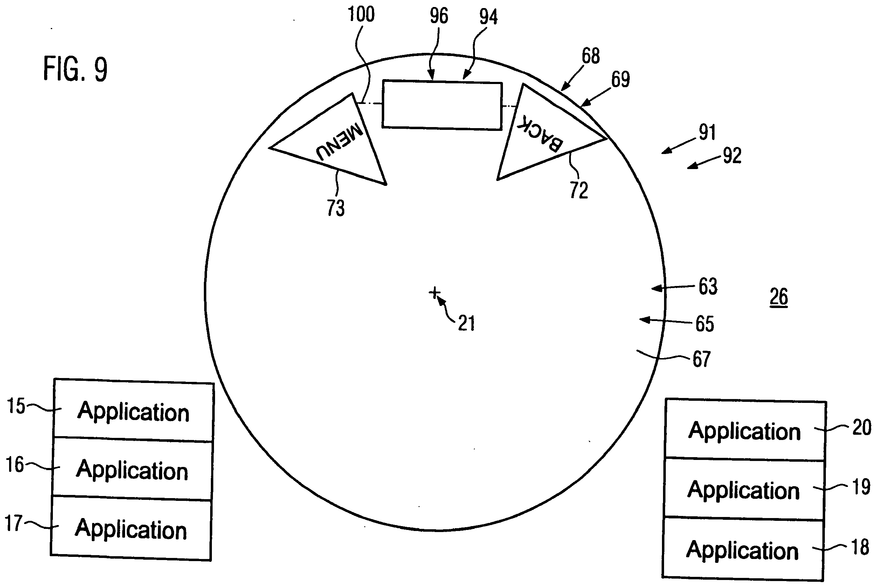

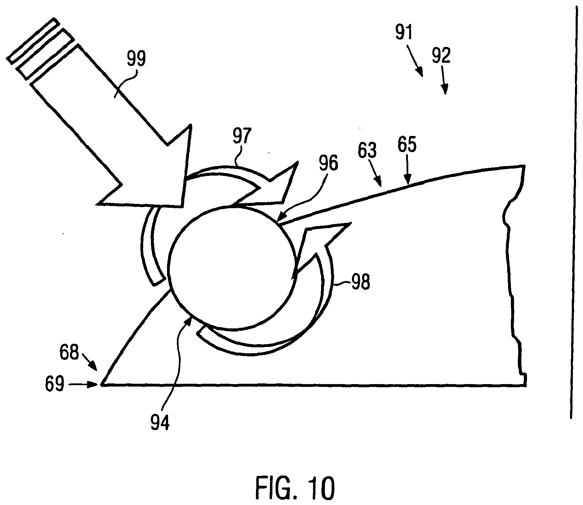

Figs 9 and 10 schematically show a multifunction input device 91 according to a third illustrative example. In the following the differences of this input device 91 to the input device 61 of the first embodiment are described.

Instead of a ring-like or disc-like shaped rotation element the input device 91 of the third example comprises a selection unit 92 having a barrel-like, preferably a cylinder-like, shaped rotation element 94 being rotatable to the main part 63. This circumferential surface of the rotation element 94 is its touch surface 96.

As shown by the arrows 97 and 98 in Fig. 10, the rotation element 94 can be bidirectionally continuously rotated. Further, the rotation element 94 is movable in a press button-like manner as indicated by the arrow 98. By a press button-like movement a special function can be realised, e.g. an "okay" function.

The rotational axis 100 of the rotation element 94 is also inclined with respect to the middle axis 21 of the main part 63. Preferably, it is transverse to the middle axis.

## Claims

1. Multifunction input device (61, 81) for operating a plurality of systems of a power driven vehicle, the input device comprising a selection unit (62, 82) with a rotation element (64, 64') having a ring-like shape and having a touch surface (66, 66') being accessible during use of the input device, wherein an operation selection is made via the rotation of the rotation element, wherein the selection unit comprises a main part (63, 63') with a touch surface (65, 65') being accessible during use of the input device, and wherein the rotation element (64, 64') is rotatable with respect to the main part (3, 43, 63, 63'); wherein the touch surface (66, 66') of the rotation element (64, 64') is adapted to be operated by a finger or fingers while the finger(s) can stay on the touch surface (66, 66') while rotating the rotation element (64) continuously for 360° or more, wherein the rotation element (4, 64, 64') is is movable in a press button-like manner and is rotatable about a center part (70, 70'), wherein the press button-like movement can be a transverse shift movement to or along the rotational axis of the rotation element, and/or a pivoting movement around an axis different to said rotational axis, wherein the center part comprises at least one button (71) which covers the area surrounded by the ring-like shaped rotational element, and in that the rotation element (64, 64') is arranged offset with respect to a middle of the main part (63, 63'); wherein the rotation element (64, 64') is surrounded by the touch surface (65, 65') of the main part (63, 63').

2. Input device according to claim 1, wherein the main part (63, 63') comprises a hand rest (67, 67').

3. Input device according to claim 1 or 2, wherein the main part (63, 63') has a hand rest (67, 67') which does not comprise an input element.

4. Input device according to one of the preceding claims, wherein the main part (63, 63') comprises at least one button.

5. Input device according to at least one of the preceding claims, wherein the rotation element (64, 64') is arranged at or near a margin (68) of the main part (63, 63').

6. Input device according to claim 1, wherein the touch surface (66, 66') of the rotation element (64, 64') has a diameter in the range of about 1 cm to 9 cm, preferably in the range of about 1 cm to 4 cm.

7. Input device according to one of the preceding claims, wherein a basis (26) is carrying the selection unit (62).

8. Input device according to at least one of the preceding claims, wherein the main part (63, 63') and the rotation element (64, 64') are together movable with respect to a basis (26) carrying the selection unit (62, 62').

9. Input device according to claim 8, wherein the main part (3, 43, 63, 63') and the rotation element (4, 64, 64') are together transversely shiftable with respect to the basis (26).

10. Input device according to at least one of the preceding claims, wherein the touch surface (5, 45, 65, 65') of the main part (3, 43, go, 63') has a general dome-like shape, preferably a spherical calatte-lifce shape.

11. Input device according to claim 10, wherein the touch surface (6, 66, 66') of the rotation element (4, 64, 64') has a shape generally setting forth the shape of the touch surface of the main part.

12. Input device according to claim 11, wherein the main part (3, 43, 63, 63') and the rotation element (4, 64, 64') have together a generally dome-like shape, preferably a spherically calotte-like shape.

## Patentansprüche

1. Multifunktionseingabevorrichtung (61, 81) zum Bedienen einer Vielzahl an Systemen eines Kraftfahrzeugs, wobei die Eingabevorrichtung eine Auswahleinheit (62, 82) mit einem Rotationselement (64, 64') umfasst, das eine ringförmige Gestalt aufweist und eine Berührungsoberfläche (66, 66') aufweist, die während der Verwendung der Eingabevorrichtung zugänglich ist, wobei eine Betriebsauswahl mittels der Rotation des Rotationselements getroffen wird, wobei die Auswahleinheit ein Hauptteil (63, 63') mit einer Berührungsoberfläche (65, 65') umfasst, die während der Verwendung der Eingabevorrichtung zugänglich ist, und wobei das Rotationselement (64, 64') in Bezug auf das Hauptteil (3, 43, 63, 63') rotierbar ist, wobei die Berührungsoberfläche (66, 66') des Rotationselements (64, 64') geeignet ist, durch einen Finger oder Finger bedient zu werden, während der/die Finger während des durchgehenden Rotierens des Rotationselements (64) um 360° oder mehr auf der Berührungsoberfläche (66, 66') verbleiben können, wobei das Rotationselement (4, 64, 64') in einer druckknopfartigen Weise bewegbar ist und um ein Mittelteil (70, 70') rotierbar ist, wobei die druckknopfartige Bewegung eine transversale Schiebebewegung zur oder entlang der Rotationsachse des Rotationselements und/oder eine Schwenkbewegung um eine Achse sein kann, die von der Rotationsachse verschieden ist,
wobei das Mittelteil mindestens einen Knopf (71) umfasst, der einen Bereich bedeckt, der durch das ringförmig gestaltete Rotationselement umgeben ist, und in dem das Rotationselement (64, 64') in Bezug zu einer Mitte des Hauptteils (63, 63') versetzt angeordnet ist;
wobei
das Rotationselement (64, 64') durch die Berührungsoberfläche (65, 65') des Hauptteils (63, 63') umgeben ist.

2. Eingabevorrichtung nach Anspruch 1, wobei das Hauptteil (63, 63') eine Handauflage (67, 67') umfasst.

3. Eingabevorrichtung nach Anspruch 1 oder 2, wobei das Hauptteil (63, 63') eine Handauflage (67, 67') aufweist, die kein Eingabeelement umfasst.

4. Eingabevorrichtung nach einem der vorhergehenden Ansprüche, wobei das Hauptteil (63, 63') mindestens einen Knopf umfasst.

5. Eingabevorrichtung nach mindestens einem der vorhergehenden Ansprüche, wobei das Rotationselement (64, 64') an oder nahe bei einem Rand (68) des Hauptteils (63, 63') angeordnet ist.

6. Eingabevorrichtung nach Anspruch 1, wobei die Berührungsoberfläche (66, 66') des Rotationselements (64, 64') einen Durchmesser im Bereich von etwa 1 cm bis 9 cm, vorzugsweise im Bereich von etwa 1 cm bis 4 cm, aufweist.

7. Eingabevorrichtung nach einem der vorhergehenden Ansprüche, wobei eine Basis (26) die Auswahleinheit (62) trägt.

8. Eingabevorrichtung nach mindestens einem der vorhergehenden Ansprüche, wobei das Hauptteil (63, 63') und das Rotationselement (64, 64') in Bezug auf eine Basis (26), die die Auswahleinheit (62, 62') trägt, zusammen bewegbar sind.

9. Eingabevorrichtung nach Anspruch 8, wobei das Hauptteil (3, 43, 63, 63') und das Rotationselement (4, 64, 64') in Bezug auf die Basis (26) zusammen transversal verschiebbar sind.

10. Eingabevorrichtung nach mindestens einem der vorhergehenden Ansprüche, wobei die Berührungsoberfläche (5, 45, 65, 65') des Hauptteils (3, 43, 63, 63') im Allgemeinen eine kuppelförmige Gestalt, vorzugsweise eine kugelkalottenförmige Gestalt, aufweist.

11. Eingabevorrichtung nach Anspruch 10, wobei die Berührungsoberfläche (6, 66, 66') des Rotationselements (4, 64, 64') eine Gestalt aufweist, die im Allgemeinen die Gestalt der Berührungsoberfläche des Hauptteils darlegt.

12. Eingabevorrichtung nach Anspruch 11, wobei das Hauptteil (3, 43, 63, 63') und das Rotationselement (4, 64, 64') zusammen eine im Allgemeinen kuppelförmige Gestalt, vorzugsweise eine kugelkalottenförmige Gestalt, aufweisen.

## Revendications

1. Dispositif d'entrée multifonction (61, 81) destiné à actionner une pluralité de systèmes d'un véhicule à entraînement mécanique, le dispositif d'entrée comprenant une unité de sélection (62, 82) avec un élément de rotation (64, 64') ayant une forme semblable à une bague et ayant une surface de toucher (66, 66') accessible pendant une utilisation du dispositif d'entrée, dans lequel une sélection d'actionnement est faite via la rotation de l'élément de rotation, dans lequel l'unité de sélection comprend une partie principale (63, 63') avec une surface de toucher (65, 65') accessible pendant une utilisation du dispositif d'entrée, et dans lequel l'élément de rotation (64, 64') peut être mis en rotation par rapport à la partie principale (3, 43, 63, 63') ; dans lequel la surface de toucher (66, 66') de l'élément de rotation (64, 64') est adaptée pour être actionnée par un doigt ou des doigts pendant que le(s) doigt (s) peut (peuvent) rester sur la surface de toucher (66, 66') tout en mettant en rotation l'élément de rotation (64) continuellement sur 360° ou plus, dans lequel l'élément de rotation (4, 64, 64') peut être déplacé à la manière d'un bouton-poussoir et peut être mis en rotation autour d'une partie centrale (70, 70'), dans lequel le mouvement semblable à un bouton-poussoir peut être un mouvement de déplacement transversal vers ou le long de l'axe de rotation de l'élément de rotation, et/ou un mouvement pivotant autour d'un axe différent dudit axe de rotation,
dans lequel la partie centrale comprend au moins un bouton (71) qui couvre la zone entourée par l'élément de rotation en forme semblable à une bague, et en ce que l'élément de rotation (64, 64') est agencé décalé par rapport à un milieu de la partie principale (63, 63') ;
dans lequel l'élément de rotation (64, 64') est entouré par la surface de toucher (65, 65') de la partie principale (63, 63').

2. Dispositif d'entrée selon la revendication 1, dans lequel la partie principale (63, 63') comprend un repose-main (67, 67').

3. Dispositif d'entrée selon la revendication 1 ou 2, dans lequel la partie principale (63, 63') comporte un repose-main (67, 67') qui ne comprend pas d'élément d'entrée.

4. Dispositif d'entrée selon l'une quelconque des revendications précédentes, dans lequel la partie principale (63, 63') comprend au moins un bouton.

5. Dispositif d'entrée selon au moins l'une des revendications précédentes, dans lequel l'élément de rotation (64, 64') est agencé au niveau de ou près d'une marge (68) de la partie principale (63, 63').

6. Dispositif d'entrée selon la revendication 1, dans lequel la surface de toucher (66, 66') de l'élément de rotation (64, 64') a un diamètre dans la plage d'environ 1 cm à 9 cm, de préférence dans la plage d'environ 1 cm à 4 cm.

7. Dispositif d'entrée selon l'une des revendications précédentes, dans lequel une base (26) porte l'unité de sélection (62).

8. Dispositif d'entrée selon au moins l'une des revendications précédentes, dans lequel la partie principale (63, 63') et l'élément de rotation (64, 64') peuvent être déplacés ensemble par rapport à une base (26) portant l'unité de sélection (62, 62').

9. Dispositif d'entrée selon la revendication 8, dans lequel la partie principale (3, 43, 63, 63') et l'élément de rotation (4, 64, 64') peuvent ensemble être déplacés transversalement par rapport à la base (26).

10. Dispositif d'entrée selon au moins l'une des revendications précédentes, dans lequel la surface de toucher (5, 45, 65, 65') de la partie principale (3, 43, 63, 63') a une forme générale semblable à un dôme, de préférence une forme semblable à une calotte sphérique.

11. Dispositif d'entrée selon la revendication 10, dans lequel la surface de toucher (6, 66, 66') de l'élément de rotation (4, 64, 64') a une forme incluant généralement la forme de la surface de toucher de la partie principale.

12. Dispositif d'entrée selon la revendication 11, dans lequel la partie principale (3, 43, 63, 63') et l'élément de rotation (4, 64, 64') ont ensemble une forme générale semblable à un dôme, de préférence une forme semblable à une calotte sphérique.
